**Europäisches Patentamt**

**European Patent Office**

**Office européen des brevets**

(19)

(11) Publication number: **0 149 532**
**B1**

(12) # EUROPEAN PATENT SPECIFICATION

(45) Date of publication of patent specification: **07.09.88**

(21) Application number: **85300174.1**

(22) Date of filing: **10.01.85**

(51) Int. Cl.⁴: **G 11 B 17/04**

(54) Disc Players.

(30) Priority: **13.01.84 JP 5383/84**

(43) Date of publication of application:
**24.07.85 Bulletin 85/30**

(45) Publication of the grant of the patent:
**07.09.88 Bulletin 88/36**

(84) Designated Contracting States:
**AT CH DE FR GB IT LI NL**

(56) References cited:
**DE-A-3 019 928**
**DE-A-3 229 468**
**US-A-4 272 794**
**US-A-4 337 533**
**US-A-4 368 495**

(73) Proprietor: **SONY CORPORATION**
**7-35 Kitashinagawa 6-Chome Shinagawa-ku**
**Tokyo 141 (JP)**

(72) Inventor: **Ueno, Masahiro c/o Patent Division**
**Sony Corporation 7-35 Kitashinagawa-6**
**Shinagawa-ku Tokyo (JP)**
Inventor: **Naito, Takashi c/o Patent Division**
**Sony Corporation 7-35 Kitashinagawa-6**
**Shinagawa-ku Tokyo (JP)**

(74) Representative: **Thomas, Christopher Hugo**
**D Young & Co 10 Staple Inn**
**London WC1V 7RD (GB)**

Courier Press, Leamington Spa, England.

## Description

This invention relates to disc players, and particular, but not exclusively, to compact disc players.

A compact disc as used in a compact disc player allows a long period of reproduction, despite its very small diameter of 12 cm. Thus a compact disc player is suitable for outdoor use or for use in a car, so that recently there has been a requirement to make a compact disc player thinner and generally smaller. However, the following problems arise when a disc player of the kind in which a disc tray, on which the compact disc is placed, is drawn horizontally into the player body, is to be made smaller.

Firstly, as the length (front to back) of the player body becomes smaller, the amount by which the disc tray can be drawn out from the player body through the front opening is restricted, so that it becomes impossible completely to expose the compact disc on the disc tray out of the player body, and a part of the compact disc remains in the player body, even when the disc tray is drawn from the player body.

Secondly, as the height (top or bottom) of the player body becomes smaller, the height of the front opening is restricted, so that the gap between the disc on the disc tray and the upper edge of the front opening of the player body becomes very small. Thus, when the compact disc is placed horizontally on the disc tray in loading, or when the compact disc is removed from the disc tray after ejection, a part of the compact disc has to be obliquely drawn into or from the player body through the above-mentioned extremely narrow gap, and this makes the loading or ejecting operation troublesome.

US patent specification US—A—4-337-533 discloses a front loading record player comprising two turntables, one of which can be moved out of a front opening of the record player housing to enable a record disc to be loaded thereon. The disclosure in this US specification corresponds generally to the pre-characterizing part of claim 1 of the present case.

According to the present invention there is provided a disc player comprising:

a player body which has a front opening;

a disc tray on which a disc can be placed horizontally when the disc tray is in a forward position partly withdrawn from the player body through said front opening; and

a turntable in the player body;

the disc tray, on which the disc has been placed, being moved horizontally into the player body through said front opening and then being moved downwardly in the horizontal state so that the disc can be mounted horizontally on the turntable;

characterized by:

a mechanism capable of moving said disc tray downwardly in the horizontal state, just before outward movement of the disc tray through said front opening to said forward position is complete, in order to increase the clearance between the disc tray and the upper edge of said front opening so as to facilitate loading and unloading of the disc on and from the disc tray.

The invention will now be described by way of example with reference to the accompanying drawings, through which like parts are referred to by like references, and in which:

Figure 1 is a perspective view of an embodiment of disc player according to the present invention;

Figure 2 is an exploded, perspective view, partly broken away and in section, of a tray carrier with a disc tray of Figure 1;

Figure 3A is a plan view, partly broken away and in section, of the disc player of Figure 1, wherein the tray carrier is drawn from a player body;

Figure 3B is a plan view, partly broken away and in section, of the disc player of Figure 1, wherein the tray carrier is drawn into the player body;

Figure 4A is a sectional view taken along the line IVA—IVA in Figure 3A;

Figure 4B is a sectional view taken along the line IVB—IVB in Figure 3B;

Figures 5A to 5D are respective sectional views of the disc player of Figure 1 for explaining loading and ejecting operations of a disc;

Figures 6A to 6D are respective sectional views of the disc player corresponding to Figures 5A to 5D, for explaining the movements of the disc tray and tray carrier;

Figure 7 is a sectional view taken along the line VII—VII in Figure 3A;

Figure 8 is a sectional view, on an enlarged scale, taken along the line VIII—VIII in Figure 3A;

Figure 9 is an explaining view of an up-and-down mechanism of a clamper for explaining its performance;

Figures 10A and 10B are respective enlarged detail views which illustrate inclined upward movements of the disc tray relative to the tray carrier; and

Figures 11A and 11B are respective sectional views of an embodiment of disc player with an alternative loading-ejecting mechanism for the disc.

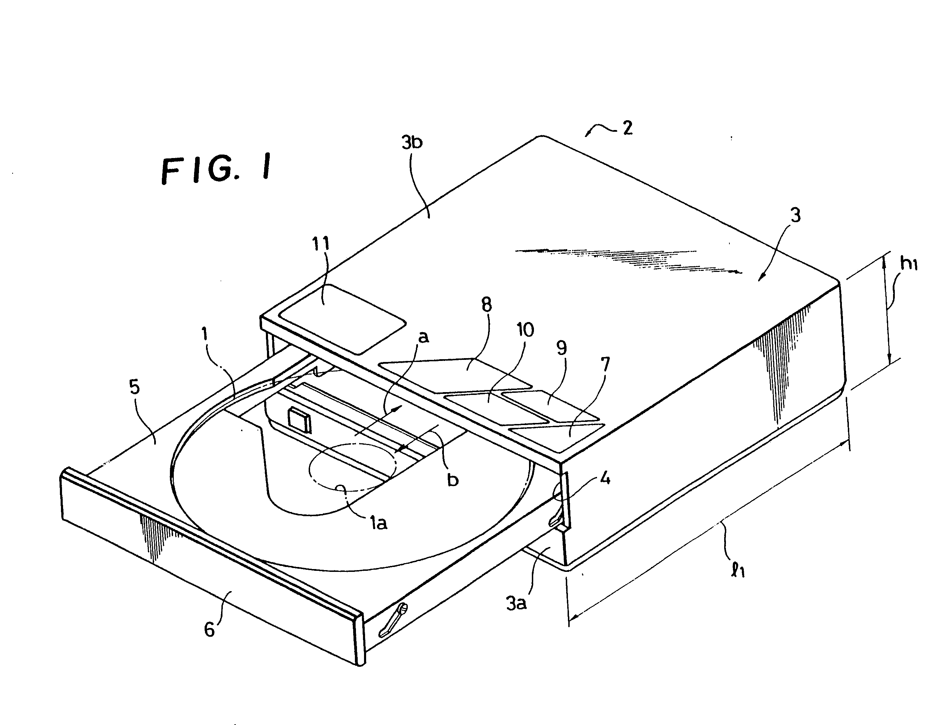

Referring initially to Figure 1, it will be seen that a disc player 2 can accommodate a compact disc 1. The diameter of the disc 1 is 12 cm, and a player body 3 of the disc player 2 is intended to be made thin and small; for example its length $l_1$ may be about 13 cm and its height $h_1$ about 4 cm.

Formed in a front wall 3a of the player body 3 is a front opening 4, and to make it possible to load the disc 1 horizontally in the player body 3, a disc tray 5 and a tray carrier 6 are drawn horizontally and freely from and into the player body 3 through the front opening 4 as shown by arrows a and b.

Disposed on the front of a top wall 3b of the player body 3 are several feather-touch switches, comprising a loading-ejecting switch 7, a reproducing-pause switch 8, a fast forward switch 9 and a fast return switch 10, and a panel 11 for displaying time, mode, address of the music to be played, etc.

When the loading-ejecting switch 7 is set to load after the disc 1 has been placed horizontally on the disc tray 5, the disc tray 5 is loaded horizontally into the player body 3 through the front opening 6 by the tray carrier 6. Thereafter if the reproducing-pause switch 8 is set to reproducing, reproduction of the disc 1 is performed, but if the fast forward switch 9 is operated, the disc 1 is fast forwarded to play a selected piece of music, and similarly if the fast return switch 10 is closed, the disc 1 is returned quickly to play a selected piece of music. After reproduction, if the loading-ejecting switch 7 is set to eject, the disc tray 5 is ejected horizontally from the player body 3 through the front opening 6 by the tray carrier 6. Thereafter if the reproducing-pause switch 8 is set to reproducing, reproduction of the disc 1 is performed, but if the fast forward switch 9 is operated, the disc 1 is fast forwarded to play a selected piece of music, and similarly if the fast return switch 10 is closed, the disc 1 is returned quickly to play a selected piece of music. After reproduction, if the loading-ejecting switch 7 is set to eject, the disc tray 5 is ejected horizontally from the player body 3 by the tray carrier 6 through the front opening 4.

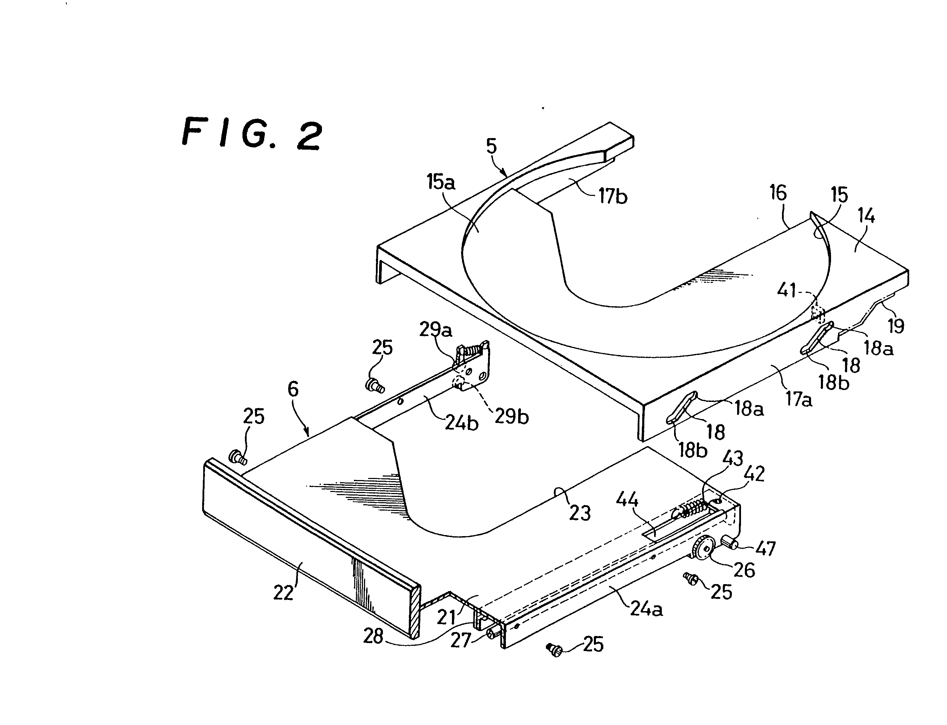

A loading-ejecting mechanism of the disc 1 will now be described with reference to Figures 2 to 10B.

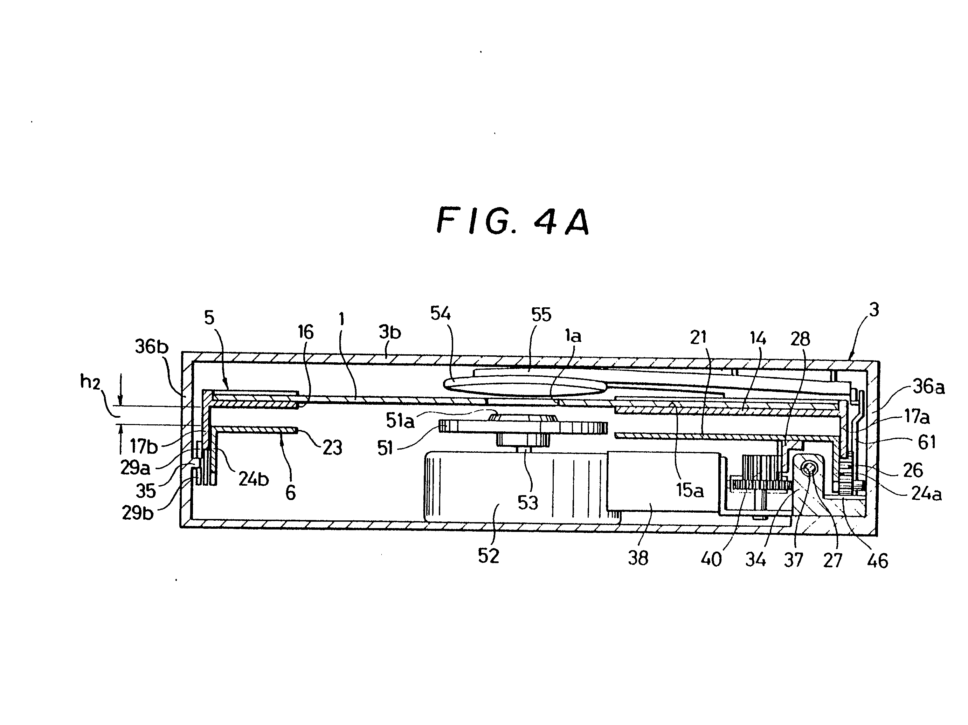

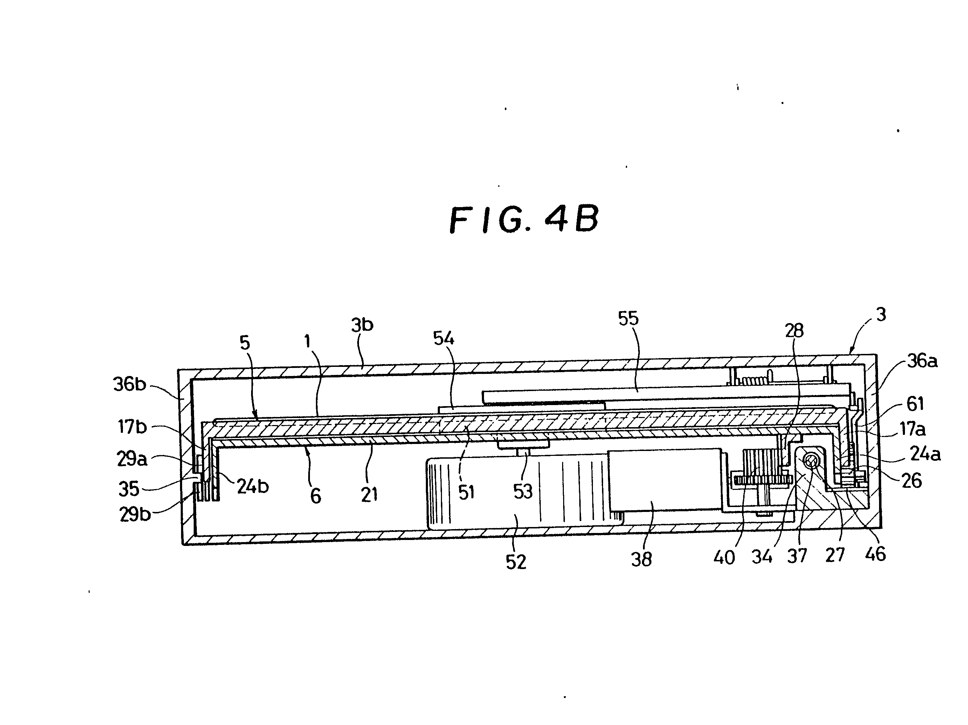

As illustrated in Figure 2, formed on the horizontal plate 14 of the disc tray 5 is a circular recess 15 for positioning the disc 1 horizontally, and a cut-out 16 is provided in a portion of the recess 15 from the centre to one side of the rear. The disc tray 5 has a substantially channel-shaped section as illustrated in Figures 4A and 4B, and a plurality of inclined slots 18 which have the same inclination towards the rear, are disposed in respective front and rear portions of each of right and left side plates 17a and 17b which extend vertically downward from the horizontal plate 14.

Formed integrally in the end portion of one of the side plate 17a is an inclined rack 19 which has the same angle of inclination as the inclined slot 18.

The disc tray 5 is moulded integrally from synthetic resin, and if necessary, is reinforced with a metal plate or the like. In this way, the inclined rack 19 can be formed very easily.

Next, as shown in Figure 2, on the front of a horizontal plate 21 of the tray carrier 6, there is formed integrally and vertically a lid 22 for covering the front opening 4 of the player body 3, and a cut-out 23 is provided in a position corresponding to the cut-out 16 of the disc tray 5.

The tray carrier 6 also has a substantially channel-shaped section as illustrated in Figures 4A and 4B, and a pair of guide pins 25 are fixed to respective front and rear portions of each of right and left side plates 24a and 24b which extend vertically downward from the horizontal plate 21.

In the rear portion of one of the side plates 24a there is rotatably arranged a pinion 26, and under the horizontal plate 21 and adjacent to one of the side plates 24a, there are disposed a horizontal guide shaft 27 and a horizontal rack 28 which extend along the side plates 24a and 24b.

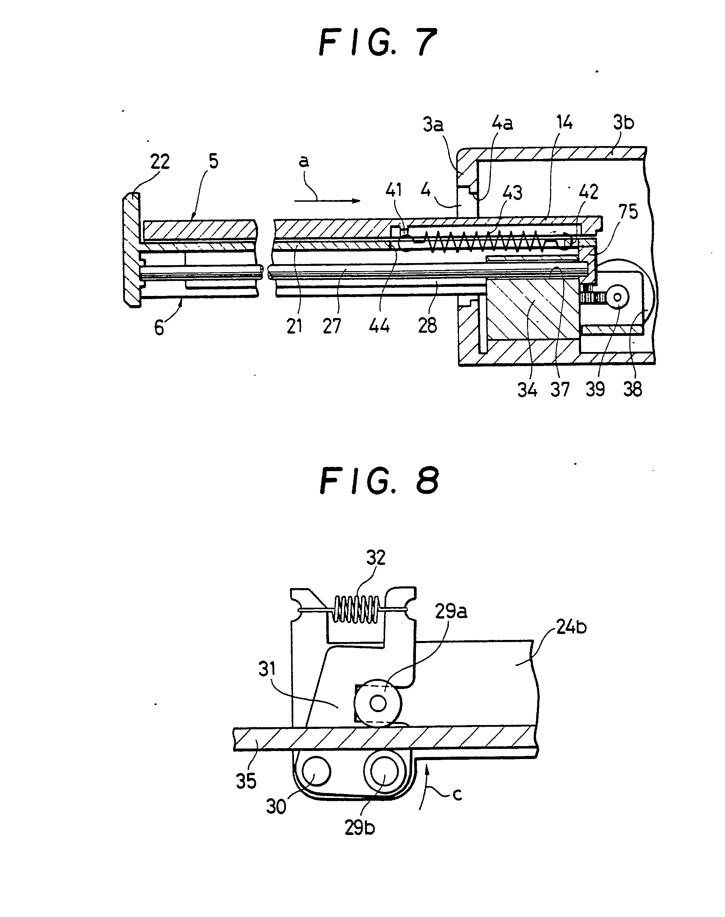

Disposed rotatably in the rear portion of the other of the side plates 24b are a pair of upper and lower guide rollers 29a and 29b as shown in Figure 8. The lower guide roller 29b is rotatably mounted in a swing plate 31 which is able to turn on a pin 30 and is urged in the direction of arrow c by a spring 32.

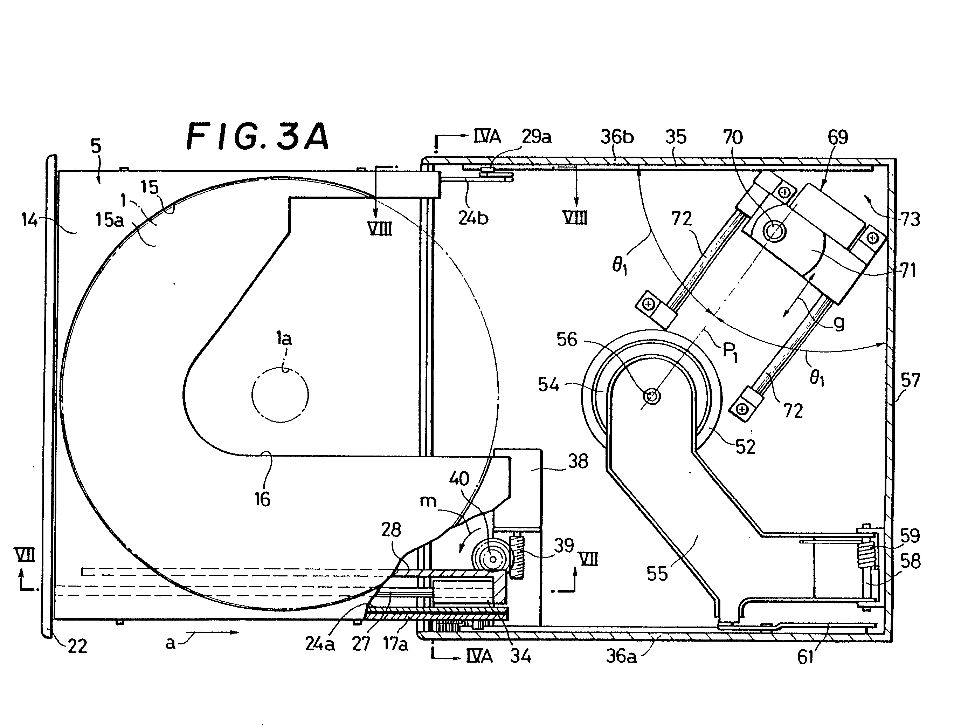

Next, as shown in Figures 3A to 6D, the disc tray 5 is stacked horizontally on the tray carrier 6, the four guide pins 25 engage with the respective inclined slots 18, and the upper side of the pinion 26 engages with the inclined rack 19.

On the other hand, the tray carrier 6 is supported horizontally by a horizontal bearing 37 and a horizontal guide rail 35 bodily disposed in the player body 3.

That is, as shown in Figures 3A to 4B and Figure 7, a bearing block 34 is disposed adjacent to the front opening 4 and inside a side wall 36a of the player body 3, and the horizontal guide shaft 27 is loosely fitted in the bearing 37 which is provided horizontally through the bearing block 34.

The horizontal guide rail 35 is so formed integrally with the other side wall 36b as to protrude from its inside face, and the upper and lower guide rollers 29a and 29b are in contact with the upper and lower faces respectively of the horizontal guide rail 35.

Hence, the tray carrier 6 on which the disc tray 5 is stacked can be moved horizontally guided by the horizontal guide shaft 27 and the horizontal guide rail 35. As shown in Figure 8, the horizontal guide rail 35 is sandwiched in between the upper and lower guide rollers 29a and 29b, and is resiliently pressed by the force of the spring 32, so that the tray carrier 6 is restrained from rattling against the horizontal guide rail 35, and is moved horizontally and smoothly on the horizontal guide rail 35.

Next, as shown in Figures 3A to 4B, arranged in the player body 3 are a motor 38 and a pinion 40 which is driven by the motor 38 through a reduction mechanism, that is, a worm gear 39, and the pinion 40 engages with the horizontal rack 28 of the tray carrier 6, so that the tray carrier 6 can be moved horizontally forward or backward by normal or reverse rotation of the motor 38.

As illustrated in Figures 2 and 7, respective end hooks of a spring 43 engage with eyes 41 and 42 which are disposed in the respective horizontal plates 14 and 21 of the disc tray 5 and the tray carrier 6. Thereby, the tension spring 43 urges the disc tray 5 towards the rear of the tray carrier 6 and in the longitudinal direction of the disc player 2 as shown by arrow a in Figure 7. The tension spring 43 is in an elongated opening 44 which is provided in the horizontal plate 21 of the tray carrier 6.

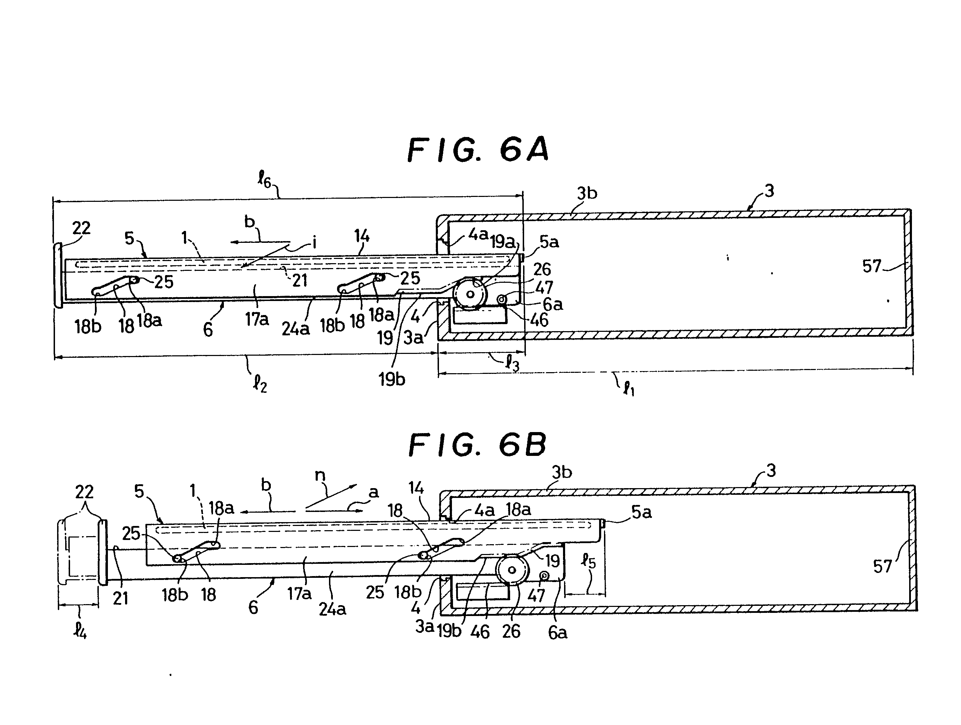

As illustrated in Figure 6A, a horizontal rack 46 is disposed in the player body 3, and just before the tray carrier 6 is drawn horizontally out of the player body 3 through the front opening 4 and stopped, the pinion 26 engages at its bottom side with the horizontal rack 46 and is rotated. The horizontal rack 46 is short and formed integrally at one side of the bearing block 34 in the longitudinal direction of the disc player 2 as shown in Figures 4A and 4B.

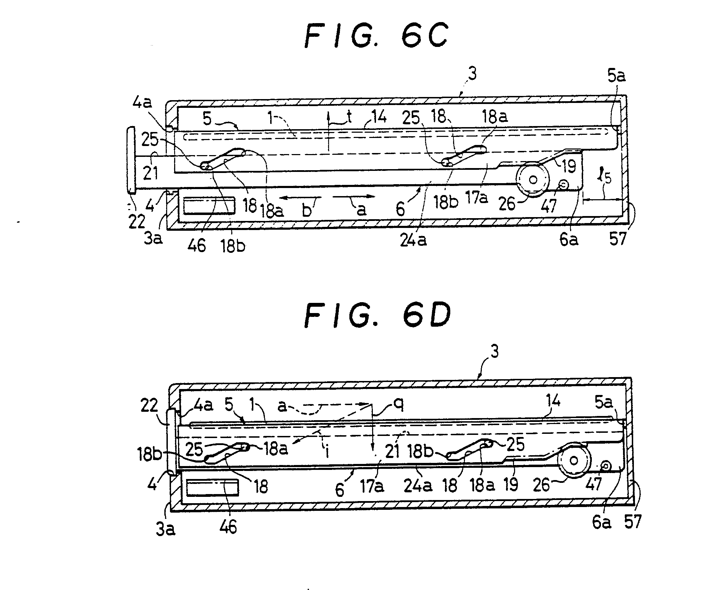

As shown in Figure 6D, a pin 47 is arranged in the rear part of one of the side plates 24a of the tray carrier 6 so as to form a clamper, which is described later, to be driven downward, just before the tray carrier 6 is drawn horizontally into the player body 3 and stopped.

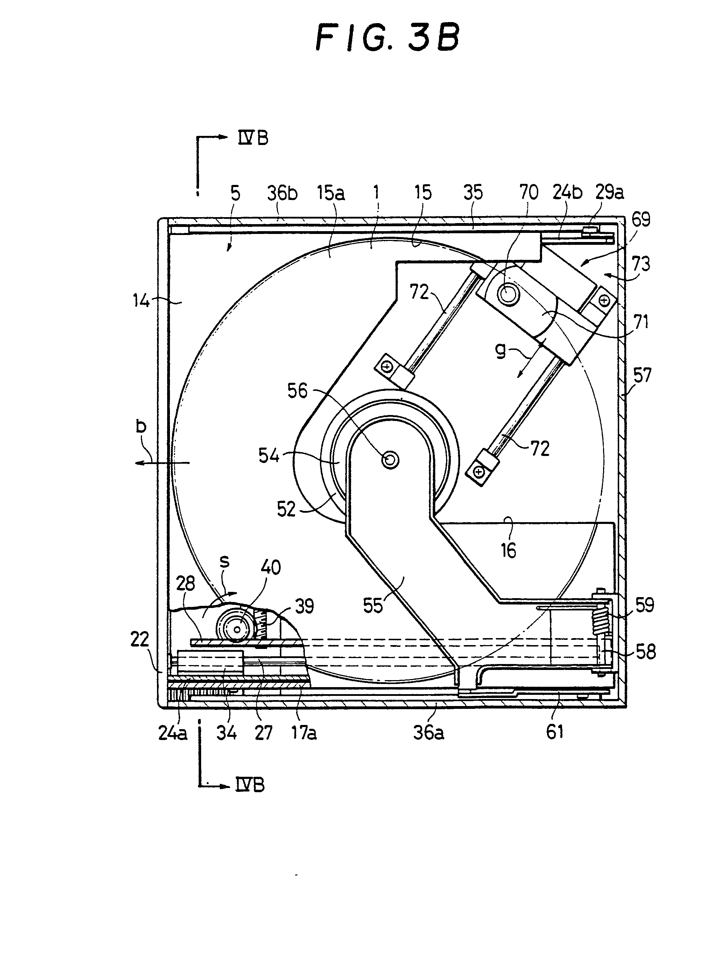

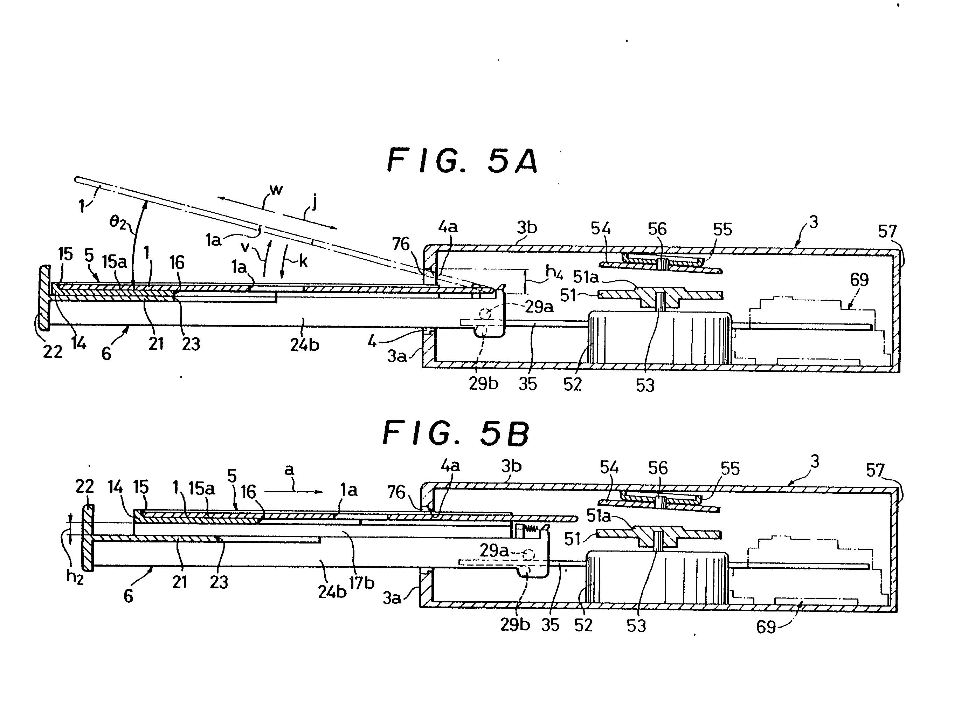

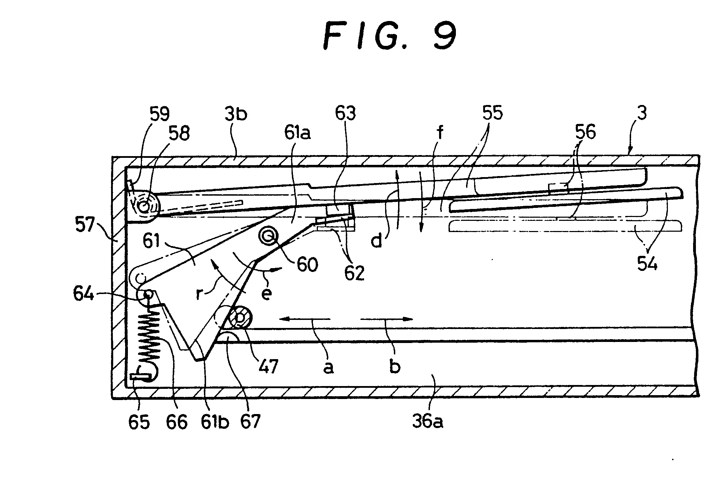

Next, as shown in Figures 5A to 5D, a turntable 51 is arranged horizontally at the centre of the player body 3. The turntable 51 is mounted on the top of a motor shaft 53 of a drive motor 52 and is turned horizontally by the drive motor 52. Over the turntable 51, there is arranged a clamper 54 which can be moved upwardly and downwardly. The clamper 54 is suspended rotatably from a lifting arm 55 at its free end through a suspension rod 56 as illustrated in Figures 3A, 3B and 9.

A control plate 61 pivots in the upward and downward directions on a pin 60 which protrudes from the inside face of one of the side walls 36a of the player body 3, and a projection 63 formed integrally with the lifting arm 55 engages a projection 62 formed integrally with an upper end 61a of the control plate 61.

A substantially vertical spring 66 is provided between eyes 64 and 65 which are respectively disposed in a lower end 61b of the control plate 61 and the rear wall 57 of the player body 3, and by the force of this spring 66, the control plate 61 is urged rotatably in the direction of arrow e as shown in Figure 9, so that the lifting arm 55 is urged upwardly (in the direction of arrow d) as shown in Figure 9 through the projections 62 and 63.

As shown in Figures 3A and 3B, an optical pick-up device 69 for recording signals on and reproducing the signals from the disc 1 is arranged at one of the rear sides of the player body 3.

The optical pick-up device 69 comprises an objective lens for convergently irradiating the recording track in the lower face of the disc 1 with a laser beam, and a two-axes driving device 71, and can be moved horizontally in the radial direction of the disc 1, that is in the direction of arrow g while being guided by a pair of parallel guide shafts 72. In other words, the optical pick-up device 69 is moved horizontally in the radial direction of the disc 1, that is in the direction of arrow g along a base line $P_1$ which is inclined at an angle $\theta_1$ of about 45° against the side wall 36b and rear wall 57 of the player body 3.

Accordingly, the pick-up device 69 can be held in the corner 73 formed by the side wall 36b and the rear wall 57 when the objective lens 70 is underneath the initial position of the recording track, so avoiding increase of the length $l_1$ of the player body 3 due to the corner not being effectively utilized by the optical pick-up device 69.

The loading operation of the disc 1 will now be described.

Firstly as illustrated in Figure 6A, before the loading operation is performed, the tray carrier 6 is in a state of having been drawn horizontally by a predetermined length $l_2$ in the direction of arrow b from the player body 3 through the front opening 4, and the disc tray 5 on the tray carrier 6 is in a state of having been moved downwardly in parallel with the tray carrier 6 along the inclined slots 18, that is in the direction of arrow i. However, the disc tray 5 is not drawn from the player body 3 completely and the rear part 5a of the disc tray remains in the player body 3 over a length $l_3$.

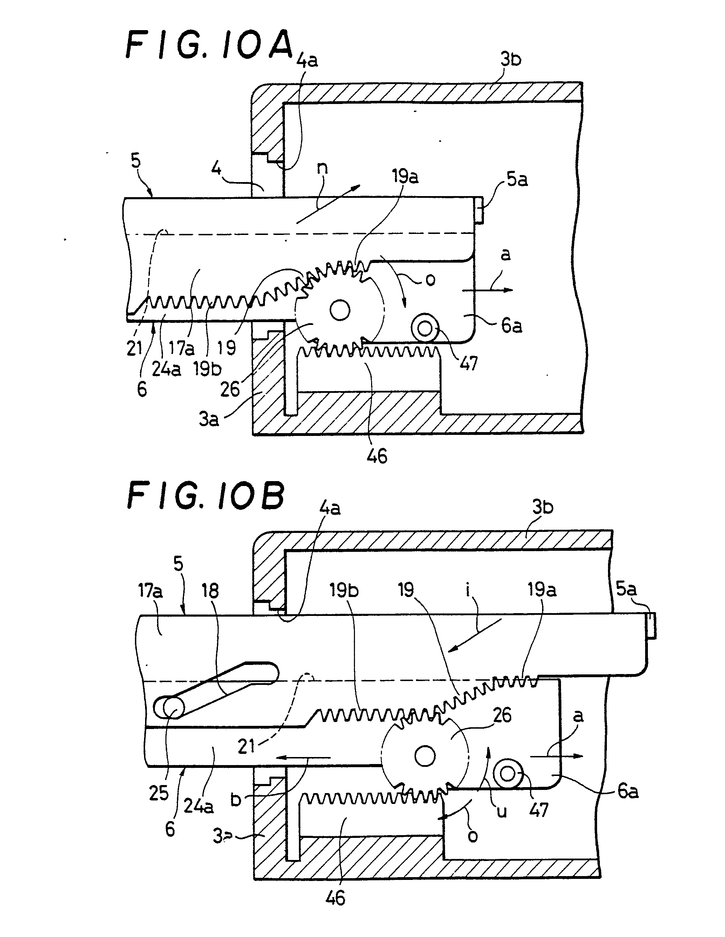

Before the loading operation is performed, as shown in Figures 6A and 10A, the pinion 26 engages at its upper side with the upper portion 19a of the inclined rack 19 and engages at its lower side with the front portion of the horizontal rack 46. As shown in Figure 6A, the guide pins 25 are held at the respective upper sides of the inclined slots 18.

As shown in Figure 7, the spring 43 is in a state of expansion, and the tray carrier 6 is restricted in its forward movement, because the rear end supporting block 75 of the horizontal guide shaft 27 abuts against the rear face of the bearing block 34.

In this state, the disc 1 is inserted into the recess 15 of the disc tray 5 and positioned horizontally on the bottom face 15a of the recess 15 as shown with a solid line in Figure 5a. The disc 1 is inserted in the direction of arrow j in the player body 3 through the front opening 4 as shown with a phantom line in Figure 5A, and then turned in the direction of arrow k so as to be inserted horizontally into the recess 15.

After the disc 1 has been placed horizontally on the disc tray 5, the loading-ejecting switch shown in Figure 1 is set to loading. The motor 38 rotates in the normal direction and the pinion 40 rotates in the direction of arrow m through the worm gear 39 as shown in Figure 3A, so that the tray carrier 6 is driven in the direction of arrow a by the horizontal rack 28.

As shown in figures 5B and 6B, the tray carrier 6 is guided by the horizontal guide shaft 27 and the horizontal guide rail 35 to be drawn horizontally in the direction of arrow a.

While the tray carrier 6 is moved horizontally in the direction of arrow a by a predetermined distance $l_4$ from the position shown in Figure 6A to the position shown in Figure 6B, the disc tray 5 is moved upwardly in parallel with the tray carrier 6 along the inclined slots 18, in other words, in the direction of arrow n. That is, as the tray carrier 6 moves horizontally in the direction of arrow a, the pinion 26 rolls in the direction of arrow o on the fixed horizontal rack 46 and proceeds in the direction of arrow a. Then, the inclined rack 19 is driven in the direction of arrow n due to rotation of the pinion 26 in the direction of arrow o, and simultaneously the disc tray 5 is pulled in the direction of arrow a by the force of the spring 43 shown in Figure 7.

Thus, as shown with a solid line in Figure 6B, the disc tray 5 is moved upwardly in the direction of arrow n in parallel with the tray carrier 6, the guide pins 25 are moved to the respective lower ends 18b of the inclined slots 18, and the pinion 26 is also moved to a position in which the pinion 26 engages at its upper side with the lower portion 19b of the inclined rack 19.

And as the tray carrier 6 is further drawn horizontally in the direction of arrow a, the pinion 26 becomes separated from the horizontal rack 46 as shown in Figure 6B.

Due to this parallel displacement of the disc tray 5 in the direction of arrow n, the rear end 5a of the disc tray 5 protrudes, as shown in Figure 6B, in the direction of arrow a from the rear end 6a of the tray carrier 6 by a predetermined length $l_5$, and the disc tray 5 is lifted up from the surface of the tray carrier 6 by a predetermined height $h_2$ as shown in Figures 4A and 5B.

Thus, the disc 1 on the disc tray 5 attains an intermediate height as compared with the turntable 51 and the clamper 54 as shown in Figure 5B.

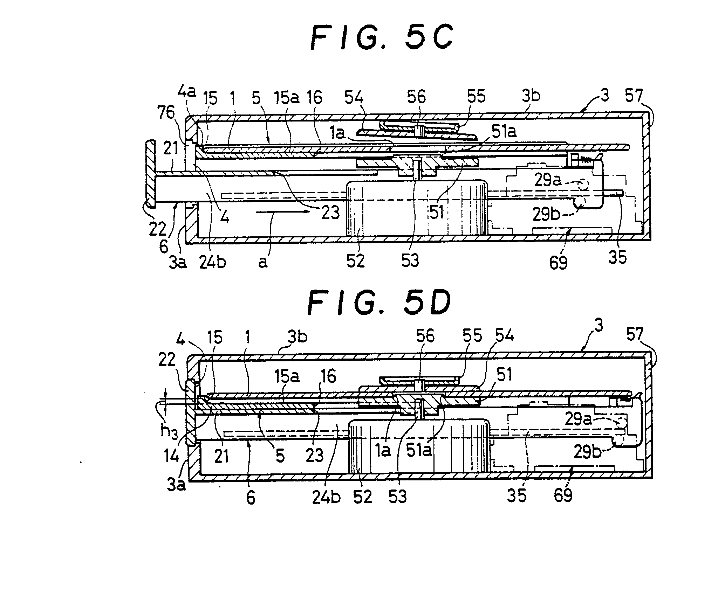

As the tray carrier 6 is drawn horizontally in the direction of arrow a, the disc 1 is drawn horizontally in between the turntable 51 and the clamper 54. When the disc 1 is drawn horizontally into the position where a centre hole 1a of the disc 1 is aligned with the centre pin 51a of the turntable 51 as shown in Figure 5C, the rear end 5a of the disc tray 5 abuts against the rear wall 57 of the player body 3 as shown in Figure 6C and stops thereat.

However, even after the disc tray 5 stops, the tray carrier 6 is drawn horizontally in the direction of arrow a by the length $l_5$ shown in Figure 6, and stops at the position shown in Figure 6D.

Thus, as shown in Figure 6D, the guide pins 25 are moved to the respective upper ends 18a of the inclined slots 18, and thereby, the disc tray 5 descends vertically without rotation in the direction of arrow q.

That is, as the tray carrier 6 is moved in the direction of arrow a, the disc tray 5 is moved relatively in the direction of arrow i in parallel with the tray carrier 6. As a result, the horizontal displacement of the disc tray 5 is offset by that of the tray carrier 6, so that the disc tray 5 descends vertically in the direction of arrow q, and the spring 43 shown in Figure 7 is expanded again.

Due to the descent of the disc tray 5 in the direction of arrow q, the disc 1 on the disc tray 5 is moved downwardly, and mounted horizontally on the turntable 51 as shown in Figures 4B and 5D. Thereat, the centre hole 1a of the disc 1 engages with the centre pin 51a of the turntable 51.

The disc 1 is mounted on the turntable 51, just before the disc tray 5 reaches the lowermost position. Therefore, at the time when the disc tray 5 reaches the lowermost position, the disc 1 is separated from the bottom face 15a of the recess 15 by a predetermined height $h_3$ as shown in

Figure 5D, so that the disc 1 is freely rotatable.

When the tray carrier 6 is completely drawn into the player body 3, the front opening 4 of the player body 3 is closed by the lid 22, which is provided in the front end of the tray carrier 6 as shown in Figure 5D.

While the tray carrier 6 is drawn horizontally in the direction of arrow a from the position shown in Figure 6C by the predetermined length $l_5$, a pin 47 fixed to the tray carrier 6 abuts against the lower end portion 61b of the control plate 61 as shown with a solid line in Figure 9 and moves the lower end portion 61b in the direction of arrow a to a position shown by a dot-and-dash line in Figure 9.

Hence, the control plate 61 is rotated in the direction of arrow r against the spring 66, so that the lifting arm 55 is rotated in the direction of arrow d by the force of the spring 59 and the clamper 54 is moved downwardly. Then, the clamper 54 presses down the disc 1 by the force of the spring 59 and fixes the disc 1 on the turntable 51 as shown in Figure 5D.

Thus, the loading operation of the disc 1 is completed. The motor 38 is stopped by a sensor (not shown) to locate the tray carrier 6 in the position shown in Figure 6D, where the tray carrier 6 is completely drawn in, and the tray carrier 6 is locked in the above position by the operation of the worm gear 39 used as the reduction mechanism as shown in Figure 3B.

Next, if the reproducing-pause switch 8 shown in Figure 1 is set to reproduction, after the loading operation of the disc 1 is over, the motor 52 is driven to rotate the turntable 51, so the disc 1 also turns, and the optical pick-up device 69 is moved in the radial direction of the disc, that is in the direction of arrow g as shown in Figure 3B.

Then, the disc 1 is read by the laser beam from the objective lens 70 irradiating the recording track on this disc 1, and the desired reproduction is performed.

The ejecting operation of the disc 1 will now be described.

If the loading-ejecting switch 7 shown in Figure 1 is set to eject, after the desired reproduction has been performed, the motor 38 is driven reversely and the pinion 40 is rotated in the direction of arrow s by the motor 38 through the worm gear 39 as shown in Figure 3B.

Then, the tray carrier 6 is horizontally drawn out reversely in the direction of arrow b. That is, the ejecting operation is the reversed of the loading operation.

Firstly, while the tray carrier 6 is horizontally drawn out in the direction of arrow b from the position shown in Figure 6D to the position shown in Figure 6C by the length $l_5$, the pin 47 of the tray carrier 6 is separated in the direction of arrow b from the lower end portion 61b of the control plate 61 as shown with the solid line in Figure 9. Thus, the control plate 61 is rotated in the direction of arrow e by the force of the spring 66, and the projection 62 pushes up the projection 63, so that the lifting arm 55 is rotated in the

**0 149 532**

direction of arrow d against the spring 59. Therefore, the clamper 54 ascends to the position shown in Figure 5C.

For this duration, as shown in Figure 6C, the disc tray 5 causes a parallel displacement in the direction of arrow t by the force of the spring 43 shown in Figure 7. The disc 1 is then again set in the recess 15 of the disc tray 5 as shown in Figure 5C and lifted upwardly from the turntable 51.

Successively, the tray carrier 6 is drawn horizontally in the direction of arrow b from the position shown in Figure 6C to the position shown in Figure 6A. Then, the disc 1 is carried out by the disc tray 5 stacked on the tray carrier 6.

When the tray carrier 6 is drawn out to the position shown in Figure 6B, the pinion 26 begins to engage at its lower side with the horizontal rack 46 as shown in Figure 10B, and while the tray carrier 6 is horizontally drawn in the direction of arrow b from the position shown in Figure 6B to the position shown in Figure 6A by the predetermined distance $l_4$, rolling on the horizontal rack 46 in the direction of arrow u as shown in Figures 10A and 10B, the pinion 26 proceeds in the direction of arrow b.

Due to rotation of the pinion 26, the inclined rack 19 is driven in the direction of arrow i in a reversal of the loading operation. And, guided by the inclined slots 18 as shown in Figure 6A, the disc tray 5 finally causes a parallel downwardly inclined displacement in the direction of arrow i towards the tray carrier 6. The spring 43 shown in Figure 7 is then expanded again.

Thus, the ejecting operation is completed. The tray carrier 6 is stopped, because the rear end supporting block 75 of the horizontal guide shaft 27 abuts against the bearing block 34 at its rear face as shown in Figure 7, and the motor 38 is also stopped, for it is detected by a sensor (not shown) that the tray carrier 6 has been fully drawn out.

To sum up, the disc player 2 is so constructed that when the disc 1 on the disc tray 5 is drawn horizontally in the direction of arrow b from the player body 3 through the front opening 4 and ejected as shown in Figure 5A, the disc tray 5 is moved downwardly in the direction of arrow i in parallel with the tray carrier 6, just before the tray carrier 6 is fully drawn in direction of arrow b and stopped as shown in Figure 6A. ·

Therefore, when the disc 1 is to be ejected as shown in Figure 5A, the bottom face 15a of the recess 15 of the disc tray 5, on which the disc 1 is set, is lowered sufficiently from the upper edge 4a of the front opening 4 of the player body 3, and the clearance $h_4$ is enlarged fully, so that an angle $\theta_2$ can be made very large. This angle $\theta_2$ is necessary at the time when the disc 1 on the disc tray 5 is turned in the direction of arrow v as shown with the dot-and-dash line in Figure 5A, and then removed in the upwardly inclined direction of arrow w. Hence, the operation of setting the disc 1 on the disc tray 5 before loading, or reemoving the disc 1 from the disc tray 5 after ejection can be performed very easily.

As the disc tray 5 is moved downwardly and at the same time, horizontally in the direction of arrow b, that is resultantly moved in the direction of arrow i in parallel with the tray carrier 6, it is possible to draw the disc tray 5 fully from the player body 3, even although the amount $l_2$ the tray carrier 6 is withdrawn from the player body 3 is so restrained as to be comparatively small.

As a result, the length $l_6$ from the front face of the tray carrier 6 to the rear face of the disc tray 5 can be made very small, and the length $l_1$ of the player body 3 can be shortened to a length of about 13 cm, which is nearly equal to the diameter 12cm of the disc 1.

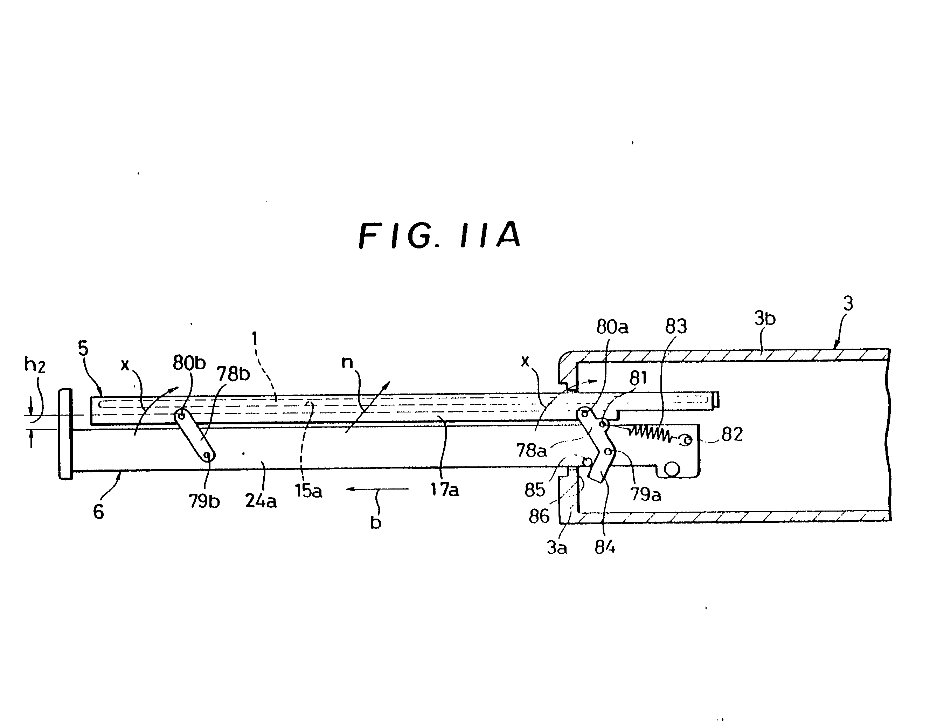

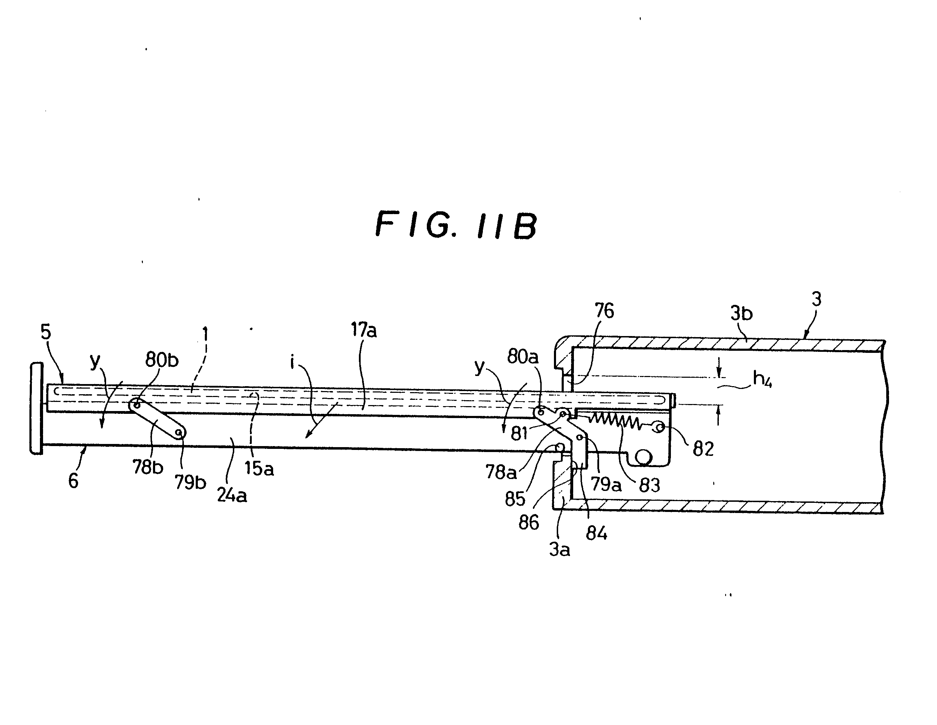

An alternative loading-ejecting mechanism for the disc 1 will be described referring to Figures 11A and 11B.

In this case, the disc tray 5 is moved upwardly in the direction of arrow n, or downwardly in the direction of arrow i in parallel with the tray carrier 6, by means of a pair of right and left parallel crank mechanisms.

That is, each pair of right and left parallel cranks 78a and 78b pivot rotatably on the respective pins 79a and 79b which protrude from the right and left side plates 24a and 24b, and the upper ends of each pair of parallel cranks 78a and 78b are pivotally mounted on the respective right and left side plates 17a and 17b through the pins 80a and 80b.

Each pair of parallel cranks 78a and 78b is urged rotatably in the direction of arrow x as shown in Figure 11A by the force of respective springs 83 which are mounted between spring blocks 81 provided in each of the parallel cranks 78a and spring blocks 82 provided in the right and left side plates 24a and 24b, respectively.

At least one of the above two cranks 78a integrally includes an arm 84 which projects downwardly from near the pin 79a, and if the arm 84 abuts against a stop 85 which is disposed in the side plate 24, the rotation of the crank 78a in the direction of arrow x is restricted as shown in Figure 11A.

In the ejecting operation of the disc 1 previously described, each pair of parallel cranks 78a and 78b has been rotated in the direction of arrow x by the force of the spring 83 as shown in Figure 11a, when the tray carrier 6 begins to be drawn horizontally in the direction of arrow b from the player body 3 through the front opening 4. Therefore, the disc tray 5 is drawn out by the tray carrier 6 having been moved upwardly in the inclined direction of arrow n in parallel with the tray carrier 6 by the predetermined height $h_2$.

Just before the tray carrier 6 is fully drawn out as illustrated in Figure 11B, the arm 84 of the parallel crank 78a abuts against the stop 86 which is disposed in the player body 3, and each pair of parallel cranks 78a and 78b is rotated in the direction of arrow y as shown in Figure 11B against the force of the spring 83.

As a result, the disc tray 5 causes a parallel downwardly inclined displacement in the direction of arrow i towards the tray carrier 6, just before the tray carrier 6 is fully drawn out as

shown in Figure 11B, and thereby, the size $h_4$ of the clearance 76 previously described is much enlarged as illustrated in Figure 11B.

This invention can be applied not only to a compact disc player but also to various kinds of disc player used for audio and video discs.

The feature of the embodiments described is that when the disc tray is drawn from the player body through the front opening in order to eject the disc, the disc tray is moved downwardly in parallel with the tray carrier and the clearance between the top face of the disc tray on which the disc is placed and the upper edge of the front opening of the player body can be much enlarged.

Accordingly, even although the disc player is made thinner and smaller, so that the disc tray cannot be drawn completely from the player body through the front opening and the size of the front opening is restricted, placing the disc on or removing the disc from the disc tray can be performed very easily due to the much enlarged clearance between the disc on the disc tray and the upper edge of the front opening.

Moreover, when the disc tray is drawn horizontally from the player body by the tray carrier, the disc tray is moved downwardly so that the tray carrier can be sufficiently drawn from the player body, even although the amount of the tray carrier is withdrawn from the player body is restricted to be comparatively small. Hence, the length of the player body can be made small.

## Claims

1. A disc player comprising:
a player body (3) which has a front opening (4);
a disc tray (5) on which a disc (1) can be placed horizontally when the disc tray (5) is in a forward position partly withdrawn from the player body (3) through said front opening (4); and
a turntable (51) in the player body (3);
the disc tray (5), on which the disc (1) has been placed, being moved horizontally into the player body (3) through said front opening (4) and then being moved downwardly in the horizontal state so that the disc (1) can be mounted horizontally on the turntable (51);
characterized by:
a mechanism (6, 18, 26, etc) capable of moving said disc tray (5) downwardly in the horizontal state, just before outward movement of the disc tray (5) through said front opening (4) to said forward position is complete, in order to increase the clearance between the disc tray (5) and the upper edge of said front opening (4) so as to facilitate loading and unloading of the disc (1) on and from the disc tray (5).

2. A disc player according to claim 1 wherein said mechanism (6, 18, 26, etc) comprises a tray carrier (6) capable of being horizontally drawn in and out through said front opening (4), and a means (18, 25, etc) through which said disc tray (5) is supported by said tray carrier (6) and is movable in inclined upward and downward directions parallel to said tray carrier (6).

3. A disc player according to claim 2 wherein said means (18, 25, etc) comprises a pinion (26) rotatably mounted on said tray carrier (6), a first, inclined rack (19) disposed in said disc tray (5) for engaging in mesh with said pinion (26), and a second rack (46) so arranged in said player body (3) as to be able to engage in mesh with said pinion (26), just before said outward movement of said disc tray (5) to said forward position is complete.

4. A disc player according to claim 2 wherein said means (18, 25, etc) includes a spring (43) which urges said disc tray (5) upwardly with respect to said tray carrier (6), whereby when said tray carrier (6) has been horizontally drawn against the force of said spring (43) into said player body (3), said disc tray (5) is then given a parallel downward displacement.

5. A disc player according to claim 3 wherein said first rack (19) is formed integrally with a side plate of said disc tray (5).

## Patentansprüche

1. Plattenspieler mit
— einem Spielerkörper (3), der eine Frontöffnung (4) hat,
— einer Plattenablageboden (5), auf dem eine Platte (1) horizontal placiert werden kann, wenn sich der Plattenablageboden (5) in einer vorderen, teilweise aus dem Spielerkörper (3) durch die Frontöffnung (4) herausgezogenen Position befindet, und
— einem Drehteller (51) in dem Spielerkörper (3),
welcher Plattenablageboden (5), auf dem die Platte (1) placiert worden ist, horizontal durch die Frontöffnung (4) in den Spielerkörper (3) hinein bewegt und dann abwärts in dem horizontalen Zustand bewegt wird, so daß die Platte (1) horizontal auf den Drehteller (51) gelegt werden kann, gekennzeichnet durch
— einen Mechanismus (6, 18, 26 usw.), der in der Lage ist, den Plattenablageboden (5) in dem horizontalen Zustand gerade, bevor die Auswärtsbewegung des Plattenablagebodens (5) durch die Frontöffnung (4) in die vordere Position vollständig ausgeführt ist, abwärts zu bewegen, um den Freiraum zwischen dem Plattenablageboden (5) und der oberen Kante der Frontöffnung (4) zu vergrößern, um so das Auflegen und das Entnehmen der Platte (1) auf den und von dem Plattenablageboden (5) zu erleichtern.

2. Plattenspieler nach Anspruch 1, bei dem der Mechanismus (6, 18, 26 usw.) aus einem Ablagebodenträger (6), der horizontal durch die Frontöffnung (4) eingezogen und herausbewegt werden kann, und einem Mittel (18, 25 usw.) besteht, durch welches der Plattenablageboden (5) mittels des Ablagebodenträgers (6) gehalten wird und in geneigten Aufwärts- und Abwärtsrichtungen parallel zu dem Ablagebodenträger (6) bewegbar ist.

3. Plattenspieler nach Anspruch 2, bei dem das Mittel (18, 25 usw.) ein Antriebszahnrad (26), das drehbar an dem Ablagebodenträger (6) montiert ist, eine erste geneigte Zahnstange (19), die in dem Plattenablageboden (5) zum Kämmen mit dem Antriebszahnrad (26) angeordnet ist, und eine zweite Zahnstange (46) enthält, die so in dem Spielerkörper (3) angeordnet ist, daß sie in der Lage ist, mit dem Antriebszahnrad (26) gerade, bevor die Auswärtsbewegung des Plattenablagebodens (5) in die vordere Position vollständig ausgeführt ist, zu kämmen.

4. Plattenspieler nach Anspruch 2, bei dem das Mittel (18, 25 usw.) eine Feder (43) enthält, die den Plattenablageboden (5) nach oben in bezug auf den Ablagebodenträger (6) drückt, wodurch wenn der Ablagebodenträger (6) horizontal gegen die Kraft der Feder (43) in den Spielerkörper (3) eingezogen worden ist, der Plattenablageboden (5) dann einer parallelen Abwärtsauslenkung unterworfen wird.

5. Plattenspieler nach Anspruch 3, bei dem die erste Zahnstange (19) einstückig mit einer Seitenplatte des Plattenablagebodens (5) ausgebildet ist.

## Revendications

1. Lecteur de disque, comprenant:
un corps de lecteur (3) ayant une ouverture avant (4),
un plateau (5) sur lequel un disque (1) peut être placé horizontalement lorsque le plateau (5) est dans une position avancée partiellement sortie du corps (3) par l'ouverture avant (4), et
une platine (51) placée dans le corps (3) du lecteur,
le plateau (5), sur lequel le disque (1) a été placé, étant déplacé horizontalement dans le corps (3) par l'intermédiaire de l'ouverture avant (4) et étant déplacé vers le bas, à l'état horizontal, afin que le disque (1) puisse être monté horizontalement sur la platine (51),
caractérisé par:

un mécanisme (6, 18, 26, etc.) capable de déplacer le plateau (5) vers le bas à l'état horizontal juste avant la fin du déplacement vers l'extérieur du plateau (5) par l'ouverture avant (4) vers la position avancée, afin que l'espace compris entre le plateau (5) et le bord supérieur de l'ouverture avant (4) soit accru et facilite le chargement du disque (1) sur le plateau (5) et le déchargement du disque (1) du plateau (5).

2. Lecteur de disque selon la revendication 1, dans lequel le mécanisme (6, 18, 26, etc.) comporte un support (6) de plateau qui peut être tiré horizontalement vers l'intérieur et vers l'extérieur par l'intermédiaire de l'ouverture avant (4), et un dispositif (18, 25, etc.) par l'intermédiaire duquel le plateau (5) est supporté par le support (6) et est mobile en directions inclinées vers le haut et vers le bas parallèlement au support (6) du plateau.

3. Lecteur de disque selon la revendication 2, dans lequel le dispositif (18, 25, etc.) comporte un pignon (26) monté de manière qu'il puisse tourner sur le support (6), une première crémaillère inclinée (19) disposée dans le plateau (5) et destinée à être en prise avec le pignon (26), et une seconde crémaillère (46) disposée dans le corps (3) du lecteur afin qu'elle puisse être en prise avec le pignon (26) juste avant la fin du déplacement vers l'extérieur du plateau (5) de support de disquee vers la position avancée.

4. Lecteur de disque selon la revendication 2, dans lequel le dispositif (18, 25, etc.) comporte un ressort (43) qui repousse le plateau (5) vers le haut par rapport au support (6), si bien que, lorsque le support (6) a été tiré horizontalement malgré la force du ressort (43) à l'intérieur du corps (3), le plateau (5) subit un déplacement parallèle vers le bas.

5. Lecteur de disque selon la revendication 3, dans lequel la première crémaillère (19) est formée en une seule pièce avec une plaque latérale du plateau (5).

FIG. 1

0 149 532

FIG. 2

0 149 532

FIG. 3A

# FIG. 3B

FIG. 4A

# FIG. 4B

0 149 532

*FIG. 5A*

*FIG. 5B*

# F I G. 5 C

# F I G. 5 D

## FIG. 6A

## FIG. 6B

## F I G. 6C

## F I G. 6D

# FIG. 7

# FIG. 8

# FIG. 9

# F I G. 10 A

# F I G. 10 B

# FIG. 11A

FIG. IIB